# EUROPEAN PATENT SPECIFICATION

(11) **EP 1 488 678 B1**
(45) Date of publication and mention of the grant of the patent: **22.03.2006**
(21) Application number: 04425419.1
(22) Date of filing: 08.06.2004
(51) Int. Cl.: A01D 46/24, A01D 46/26, A01D 46/30

(54) **Remote controlled helicopter**
Ferngesteuerter Mini-Huschrauber
Hélicoptère télécommandé

(30) Priority: 17.06.2003 IT FI20030172
(43) Date of publication of application: 22.12.2004
(73) Proprietor: Maflex S.r.l., 55100 S. Concordio (Lucca) (IT)
(72) Inventor: Mazzotti, Giuseppe, 55100 San Concordio Contrada (Lucca) (IT)
(74) Representative: Mannucci, Michele

(56) References cited:
- DE-A- 10 164 223
- US-A- 5 961 070
- US-B1- 6 338 237

## Description

The subject of the present invention is an apparatus for facilitating harvesting of olives and other fruit hanging from plants, or for carrying out on their foliage operations of pruning or of spraying with products for combating plant diseases or the like.

In order to facilitate and enable mechanization of said operations, various processes have been devised. For example, for gathering olives, in general a net, for the most part circular, is laid on the ground under the plant, and the foliage and branches of the plant are shaken by means of mechanical shakers in order to cause the fruit to drop. The shakers are in general mobile arms that are made to vibrate by means of appropriate actuators, which are applied to a tractor or other agricultural machine driven by an operator who brings said arms against the branches to be shaken, as disclosed in US-A-6 338 237. Said processes call for a conformation of the terrain that will enable access to the plant, for example with reduced slopes and with a consistency of the ground adequate for the weight of the agricultural machine. Furthermore, with said methods the highest parts of the plant cannot be reached, especially when this is of considerable dimensions, such as are the olive trees in the regions of the south of Italy.

The present invention has the purpose of overcoming said drawbacks and comprises, as claimed, a helicopter, remote-controlled by an operator on the ground and an implement that can be slewed which is applied to the helicopter, the implement being designed to carry out the desired operation on the plant. Provided on board the helicopter are means for slewing and actuating the implement, remote-controlled by the operator on the ground, in order to orient and bring the implement up to and against the branches to be shaken, and to actuate it. The operator can thus cause the helicopter to approach the tree, turn it and slew the implement positioning the active part thereof against the foliage and the branches in the desired position, actuate the implement and then displace the helicopter in succession into other positions around the tree to repeat the operation on the entire periphery of the plant.

The implement can be a beating-comb shaker, a pair of pruning shears or a pneumatically controlled branch-cutter or else a branch-cutter with motor-driven chain, a complex of spray nozzles, a hedge-trimming device or other implements.

Preferably, the helicopter used is of the type with two counter-rotating blades set on top of one another, equipped with a peripheral side guard and at least one top protective grill. The means for slewing and actuating the implement may comprise fluid-actuated jacks and a generator of pressure of said fluid on board the helicopter.

The remote-controlled helicopter can also be used for the transportation of agricultural materials, sacks, pallets, components to be assembled or other things.

A better understanding of the invention will emerge from the ensuing description and the attached drawings, which show a non-limiting example of the invention and in which:
- Figure 1 is a perspective view of an apparatus according to the invention;
- Figure 2 is an enlarged, detailed and partially cross-sectional view according to the line II-II of Figure 1;
- Figure 3 is a perspective view of the apparatus of Figure 1 in action; and

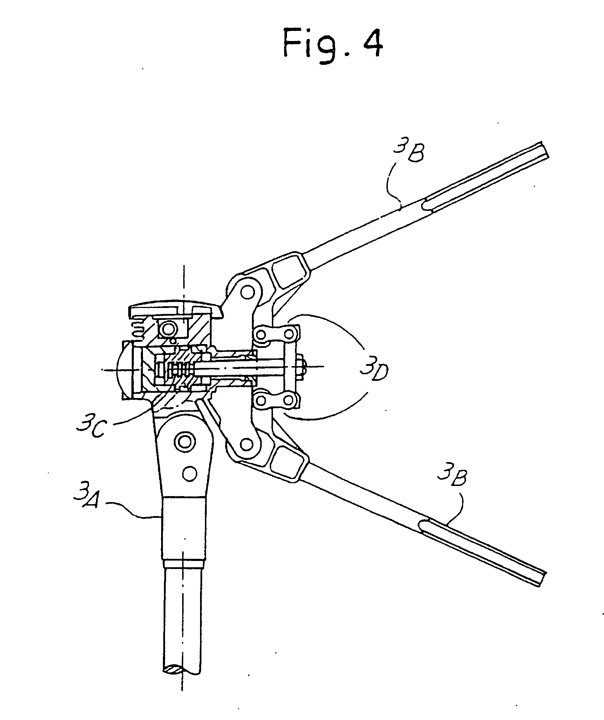

- Figure 4 is a partially cross-sectional side view of the active part of a device for shaking branches.

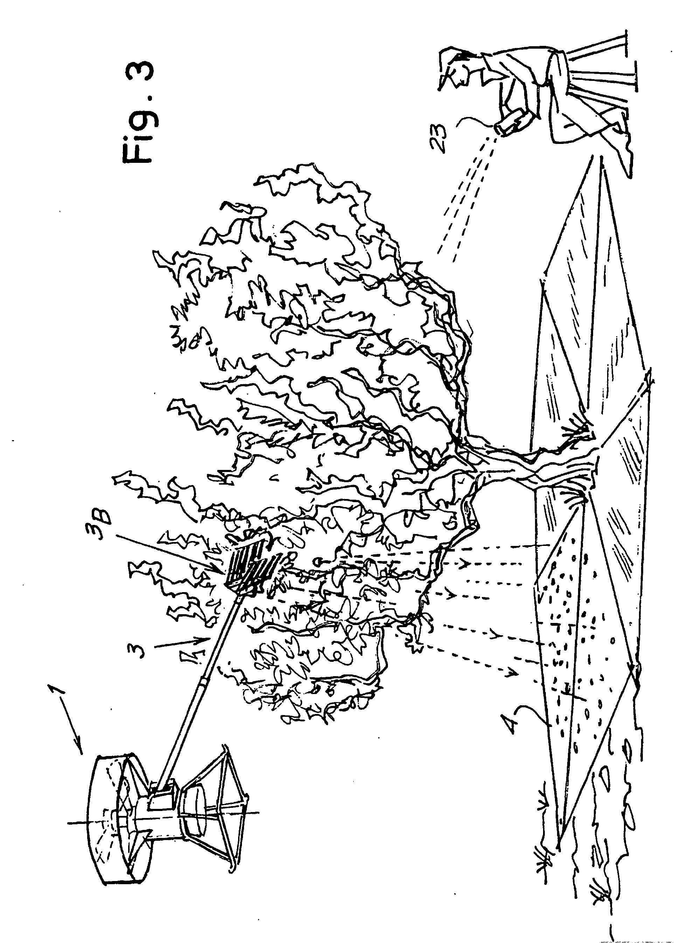

The apparatus comprises a remote-controlled helicopter 1 (Figure 3), to which there is applied a shaking implement 3, designed to shake the branches of a tree to cause the fruit to fall, for example into a net 4 previously laid out under the tree itself.

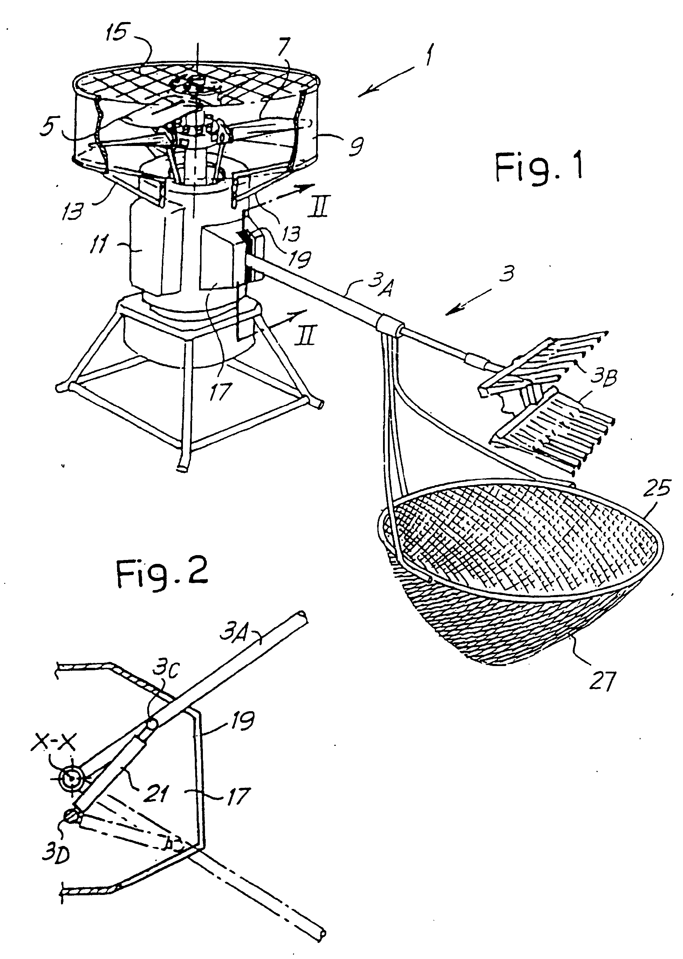

The helicopter is of the type with two counter-rotating blades 5, 7 (Figure 1). To prevent any contact between the blades and the vegetation or anything else, around these there is set a side guard 9, fixed to the body 11 of the helicopter by means of brackets 13, and applied to the edge of the top inlet of the guard 9 is a wire mesh or grill 15.

Projecting laterally from the body 11 of the helicopter is a guard 17 provided with a vertical slit-like opening 19 (see also Figure 2), from which there projects the stem 3A of the shaker 3. The internal end of the stem 3A is hinged, according to a horizontal axis (X-X), to the structure of the body 11 of the helicopter and has an attachment 3C for one end of a hydraulic jack 21, the other end 3D of which is hinged to the structure of the body 11 of the helicopter. In this way, by means of said jack 21, the shaker 3 can be slewed in a vertical plane between two end-of-travel positions represented in Figure 2 with a solid line and a dashed line, respectively.

The implement used may for example be of a type illustrated and described in the catalogue of the firm "Campagnola" (40069 Zola Predosa - Bologna (Italy) - Via Lazio, 21), for example a beater equipped, at the working end of the stem 3A, with a pair of metal combs 3B hinged to the stem. Said combs 3B are actuated by a hydraulic jack 3C by means of connecting rods 3D for oscillating against one another, shaking the branches with which said combs 3B are in contact. Installed on board the helicopter is a generator of fluid under pressure (not illustrated in the plate of drawings), designed to actuate both the jack 21 for slewing and the implement itself.

It is also possible to apply to the supporting stem 3A a ring-shaped gatherer (25) set under the combs 3B, said ring supporting a sack-shaped net (27) designed to receive the fruit that, by the action of the combs, falls from the tree.

Instead of the shaker, any other implement can be applied at the end of the stem 3A, for example, with reference to the aforesaid catalogue "Campagnola", a pneumatically actuated pair of pruning shears of the types STAR 35, F/4 or F/6, or pruning shears with motor-driven chain, for example of the type M/3.

Alternatively, it is possible to apply spray nozzles at the end of the rod that can be slewed for spraying foliage with liquids for combating plant diseases or insecticides. Said products can be stowed in an appropriate tank located on board the helicopter or else on the ground, and delivered to the nozzle by means of a purposely designed compressor and a hose, which, in the case of tank and compressor located on the ground, can be unwound from and wound on an automatic winder (for example of the type AVVO.0510 of the Campagnola catalogue) located on the ground or on board the helicopter.

The helicopter is moreover equipped with a radio transceiver system, designed to receive from a remote control 23 (Figure 3) the flight commands, as well as those for slewing and actuating the shaker.

It is understood that the plate of drawings only shows one example of embodiment, provided merely as a practical demonstration of the invention, it being possible for said invention to vary in its embodiments and arrangements. The possible presence of reference numbers in the annexed claims has the purpose of facilitating reading of the claims with reference to the description and in no way limits the sphere of protection represented by the claims.

## Claims

1. An apparatus for gathering olives, berries or other fruit, or for performing other operations on the foliage of plants, such as pruning or spraying with liquids for combating plant diseases or with insecticides, **characterized in that** it comprises: a helicopter (1) remote-controlled by an operator on the ground; an implement (3) that can be slewed, which is applied to the helicopter; and means (21) for slewing and actuating (3C, 3D) the implement remote-controlled by the operator in order to orient the implement and bring it up against the foliage of the plant, and then actuate it, so performing the operation envisaged.

2. Apparatus according to claim 1, **characterized in that** the helicopter (1) used is of the type with two counter-rotating blades (5, 7) set on top of one another, equipped with a peripheral side guard (9) and at least one top protective grill or mesh (15).

3. Apparatus according to claim 1 or claim 2, **characterized in that** said means for slewing and actuating the implement (3) comprise fluid-actuated jacks (21, 3C) and a generator of pressure of said fluid on board the helicopter.

4. Apparatus according to any one of the preceding claims, **characterized in that** said implement is a shaker or beating-comb beater (3B).

5. Apparatus according to claim 4, **characterized in that** applied to said stem (3A) is also a gatherer formed by a sack-shaped net (27), the mouth of which is fixed to a rigid ring (25).

6. Apparatus according to any one of claims 1 to 3, **characterized in that** said implement is a pair of pneumatic pruning shears.

7. Apparatus according to any one of claims 1 to 3, **characterized in that** said implement is a pruning device with motor-driven chain.

8. Apparatus according to any one of claims 1 to 3, **characterized in that** said implement is a hedge-trimming device.

9. Apparatus according to any one of claims 1 to 3, **characterized in that** said implement is a complex of spray nozzles designed to spray the foliage with liquids for combating plant diseases or insecticides.

10. Apparatus according to claim 9, **characterized in that** said complex of nozzles is supplied by a tank and by a compressor arranged on board the helicopter.

11. Apparatus according to claim 9, **characterized in that** said complex of nozzles is supplied by a tank and by a compressor arranged to the ground, the complex of nozzles being connected to the compressor by means of a hose that is unwound from and wound on an automatic winder.

12. Apparatus at least according to claim 1, used for transportation of materials, such as sacks, pallets or components to be assembled.

## Patentansprüche

1. Vorrichtung zum Ernten von Oliven, Beeren oder anderem Obst oder zum Ausführen anderer Handlungen am Laubwerk von Pflanzen, wie beispielsweise Beschneiden oder Besprühen mit Flüssigkeiten zur Bekämpfung von Pflanzenkrankheiten oder mit Insektiziden, **dadurch gekennzeichnet, dass** sie umfasst: einen Hubschrauber (1), der durch eine Bedienperson am Boden femgesteuert wird; ein schwenkbares Werkzeug (3), das an dem Hubschrauber angebracht ist; und Mittel (21) zum Schwenken und Betätigen (3C, 3D) des Werkzeugs, die durch die Bedienperson ferngesteuert werden, um das Werkzeug auszurichten und an dem Laubwerk der Pflanze in Position zu bringen und es dann zu betätigen und so die beabsichtigte Handlung vorzunehmen.

2. Vorrichtung nach Anspruch 1, **dadurch gekennzeichnet, dass** der eingesetzte Hubschrauber (1) von der Art mit zwei sich gegenläufig drehenden, übereinander angeordneten Propellerblättern (5, 7) ist, die mit einem peripheren Seitenschutz (9) und mindestens einem oberen Schutzgitter oder -maschenwerk (15) ausgestattet sind.

3. Vorrichtung nach Anspruch 1 oder Anspruch 2, **dadurch gekennzeichnet, dass** die Mittel zum Schwenken und Betätigen des Werkzeugs (3) fluidbetätigte Hebevorrichtungen (21, 3C) und einen Generator zum Erzeugen von Fluiddruck an Bord des Hubschraubers umfassen.

4. Vorrichtung nach einem der vorangehenden Ansprüche, **dadurch gekennzeichnet, dass** das Werkzeug eine Schüttelvorrichtung oder Schlagkamm-Schlagvorrichtung (3B) ist.

5. Vorrichtung nach Anspruch 4, **dadurch gekennzeichnet, dass** an dem Stiel (3A) auch eine Einsammelvorrichtung, geformt durch ein sackförmiges Netz (27), angebracht ist, deren Öffnung an einem starren Ring (25) befestigt ist.

6. Vorrichtung nach einem der Ansprüche 1 bis 3, **dadurch gekennzeichnet, dass** das Werkzeug eine pneumatische Gartenschere ist.

7. Vorrichtung nach einem der Ansprüche 1 bis 3, **dadurch gekennzeichnet, dass** das Werkzeug eine Beschneidevorrichtung mit motorbetriebener Kette ist.

8. Vorrichtung nach einem der Ansprüche 1 bis 3, **dadurch gekennzeichnet, dass** das Werkzeug eine Heckenschneidevorrichtung ist.

9. Vorrichtung nach einem der Ansprüche 1 bis 3, **dadurch gekennzeichnet, dass** das Werkzeug ein Sprühdüsenkomplex ist, der für das Besprühen des Laubwerks mit Flüssigkeiten zur Bekämpfung von Pflanzenkrankheiten oder Insektiziden ausgelegt ist.

10. Vorrichtung nach Anspruch 9, **dadurch gekennzeichnet, dass** der Düsenkomplex durch einen Tank und durch einen Kompressor gespeist wird, die an Bord des Hubschraubers angeordnet sind.

11. Vorrichtung nach Anspruch 9, **dadurch gekennzeichnet, dass** der Düsenkomplex durch einen Tank und durch einen Kompressor gespeist wird, die am Boden angeordnet sind, wobei der Düsenkomplex mit dem Kompressor mithilfe eines Schlauches verbunden ist, der von und auf eine(r) automatische(n) Wickelvorrichtung ab- und aufgewickelt wird.

12. Vorrichtung zumindest nach Anspruch 1, die zum Transport von Materialien wie Säcken, Paletten oder zu montierenden Bauteilen eingesetzt wird.

## Revendications

1. Appareil pour récolter des olives, des baies ou autres fruits, ou pour exécuter, sur le feuillage de végétaux, d'autres opérations telles qu'un cisaillement ou une pulvérisation par des liquides de traitement phytosanitaire, ou des insecticides, **caractérisé par le fait qu'**il comprend : un hélicoptère (1) télécommandé au sol par un opérateur ; un dispositif (3) pouvant être animé de pivotements et installé sur l'hélicoptère ; et des moyens (21) de pivotement et d'actionnement (3C, 3D) dudit dispositif, avec télécommande par l'opérateur, en vue d'orienter ledit dispositif et de le soulever pour qu'il porte contre le feuillage du végétal, et de l'actionner ensuite, exécutant ainsi l'opération souhaitée.

2. Appareil selon la revendication 1, **caractérisé par le fait que** l'hélicoptère (1) utilisé est du type équipé de deux pales (5, 7) tournant dans des sens opposés, placées l'une au-dessus de l'autre, équipées d'un protecteur latéral périphérique (9) et d'au moins un tressage métallique ou d'une grille supérieur(e) (15) de protection.

3. Appareil selon la revendication 1 ou la revendication 2, **caractérisé par le fait que** lesdits moyens de pivotement et d'actionnement du dispositif (3) comprennent des vérins (21, 3C) commandés par fluide et un générateur de pression dudit fluide, embarqués dans l'hélicoptère.

4. Appareil selon l'une quelconque des revendications précédentes, **caractérisé par le fait que** ledit dispositif est un agitateur ou un battoir à peignes (3B).

5. Appareil selon la revendication 4, **caractérisé par le fait qu'**un collecteur matérialisé par un filet (27) en forme de sac est également installé sur ladite tige (3A), la gueule dudit collecteur étant fixée à une bague rigide (25).

6. Appareil selon l'une quelconque des revendications 1 à 3, **caractérisé par le fait que** ledit dispositif est une paire de cisailles pneumatiques.

7. Appareil selon l'une quelconque des revendications 1 à 3, **caractérisé par le fait que** ledit dispositif est un dispositif de cisaillement équipé d'une chaîne à entraînement motorisé.

8. Appareil selon l'une quelconque des revendications 1 à 3, **caractérisé par le fait que** ledit dispositif est un taille-haies.

9. Appareil selon l'une quelconque des revendications 1 à 3, **caractérisé par le fait que** ledit dispositif est un ensemble de buses pulvérisatrices conçues pour pulvériser le feuillage à l'aide de liquides de traitement phytosanitaire, ou d'insecticides.

10. Appareil selon la revendication 9, **caractérisé par le fait que** ledit ensemble de buses est alimenté par un réservoir et par un compresseur embarqués dans l'hélicoptère.

11. Appareil selon la revendication 9, **caractérisé par le fait que** ledit ensemble de buses est alimenté par un réservoir et par un compresseur installés au sol, ledit ensemble de buses étant raccordé audit compresseur au moyen d'un tuyau dévidé et renvidé sur un enrouleur automatique.

12. Appareil selon au moins la revendication 1, utilisé pour le transport de matériaux tels que des sacs, des palettes ou des composants à assembler.
